# EUROPEAN PATENT SPECIFICATION

(11) **EP 4 246 193 B1**
(45) Date of publication and mention of the grant of the patent: **09.12.2026**
(21) Application number: 20961178.9
(22) Date of filing: 13.11.2020
(51) Int. Cl.: G02B 5/04, G02B 19/00

(54) **DISPLAY SYNERGISTIC FILM AND DISPLAY DEVICE**
SYNERGISTISCHE ANZEIGEFOLIE UND ANZEIGEVORRICHTUNG
FILM SYNERGIQUE D'AFFICHAGE ET DISPOSITIF D'AFFICHAGE

(43) Date of publication of application: 20.09.2023
(73) Proprietor: Shenzhen Nahum-Eli Optical Technology Inc, Shenzhen, Guangdong 518000 (CN)
(72) Inventor: CHEN, Fei, Shenzhen, Guangdong 518000 (CN)
(74) Representative: Hoffmann Eitle
(86) International application number: PCT/CN2020/128713
(87) International publication number: WO 2022/099622

(56) References cited:
- CN-A- 103 885 106
- CN-A- 105 929 476
- CN-A- 107 533 180
- CN-A- 109 358 447
- CN-A- 111 796 348
- JP-A- 2008 003 245
- KR-B1- 101 665 263
- KR-B1- 101 871 552
- US-A1- 2015 043 221
- US-A1- 2016 244 642
- US-A1- 2017 052 287
- US-A1- 2019 212 607
- US-A1- 2020 209 680

## Description

### TECHNICAL FIELD

The present application relates to the field of display technologies, and in particular, to a display enhancement film and a display device.

### BACKGROUND

With the development of science and technology, the market has higher and higher requirements for screen display products, such as the requirement for the screen display products to have an ultra-high resolution, and accordingly, a wide-angle optical film has become a standard configuration for a high-resolution screen, because it can significantly expand a viewing angle. However, the existing wide-angle optical films have rather high production requirements and are difficult to produce, and the current domestic technology or general manufacturers cannot produce high-quality wide-angle optical films. Therefore, it is an urgent problem to apply for an optical film that is less difficult to produce and has a better viewing angle expansion effect.
The above description is only used to assist in understanding the technical solution of the present application, and does not mean acknowledging that the above description is the prior art.
KR 101871552 B1 discloses an optical film for enhancing visibility of a display, a polarizing plate comprising the same, a module for a liquid crystal display apparatus comprising the same, and a liquid crystal display apparatus comprising the same.

### SUMMARY

A main object of the present application is to provide a display enhancement film, which aims to solve the technical problem of poor expansion effect of the viewing angle of some existing optical films.

In order to achieve the above objects, a display enhancement film according to the present application includes a substrate layer, a first light guide layer, and a second light guide layer. The first light guide layer is formed on the substrate layer and includes a plurality of light guide structures arranged at intervals and each extending in a strip shape. The light guide structure includes two side surfaces extending in a length direction of the light guide structure, and the side surfaces are arc-shaped. The second light guide layer is formed on the first light guide layer, and fills up the first light guide layer. A refractive index of the first light guide layer is different from that of the second light guide layer.

In one embodiment, the plurality of light guide structures includes a second light guide structure. A side surface of the second light guide structure is a concave arc surface, and a top surface of the second light guide structure is a flat surface.

In one embodiment, the plurality of light guide structures further includes a third light guide structure. A side surface of the third light guide structure is a concave arc surface, and a top surface of the third light guide structure is an arc surface.

In one embodiment, the top surface of the third light guide structure is a convex arc surface; and a radian of the convex arc surface is not less than 4 microns and not greater than 10 microns.

In one embodiment, a distance between the two side surfaces at the top of the light guide structure is less than a distance between the two side surfaces at the bottom of the light guide structure.

In one embodiment, a height of the light guide structure is not less than 8 microns and not greater than 20 microns. The distance between the two side surfaces at the top of the light guide structure is not less than 5 microns and not greater than 19 microns. The distance between the two side surfaces at the bottom of the light guide structure is not less than 10 microns and not greater than 35 microns.

In the invention, the plurality of light guide structures further includes a first light guide structure. The first light guide structure is a multi-step structure, and includes a first trapezoidal section, a second section, and a third trapezoidal section that are stacked from bottom to top. A side surface of the second section is an arc surface.

In one embodiment, a height of the first trapezoidal section is not less than 2 microns and not greater than 10 microns, and a total height of the second section and the third trapezoidal section is not less than 10 microns and not greater than 20 microns. On a cross section of the light guide structure, a width of a bottom edge of the first trapezoidal section is not less than 15 microns and not greater than 22 microns, a width of a bottom edge of the second section is not less than 10 microns and not greater than 21 microns, and a width of a bottom edge of the third trapezoidal section is not less than 5 microns and not greater than 19 microns.

In one embodiment, a height of the first trapezoidal section is not less than 4 microns and not greater than 7microns, and a total height of the second section and the third trapezoidal section is not less than 12 microns and not greater than 17 microns. On a cross section of the light guide structure, a width of a bottom edge of the first trapezoidal section is not less than 17 microns and not greater than 20 microns; a width of a bottom edge of the second section is not less than 13 microns and not greater than 18 microns; and a width of a bottom edge of the third trapezoidal section is not less than 8 microns and not greater than 13 microns.

In one embodiment, in an arrangement direction of the light guide structures, a distance between centers of two adjacent light guide structures is not less than 22 microns and not greater than 28 microns.

In one embodiment, a refractive index of the first light guide layer is greater than that of the second light guide layer. A difference between the refractive index of the first light guide layer and the refractive index of the second light guide layer is not less than 0.05 and not greater than 0.4.

In one embodiment, in an arrangement direction of the light guide structures, a distance between centers of two adjacent light guide structures is not less than 12 microns and not greater than 50 microns.

In one embodiment, the plurality of the light guide structures are arranged to form a circular light guide area. A plurality of the circular light guide areas are arranged on the first light guide layer.

In one embodiment, a plurality of rows of circular light guide areas are arranged on the first light guide layer.

In one embodiment, the plurality of circular light guide areas are arranged in an array.

In one embodiment, an extending direction of the light guide structure is inclined relative to a film edge of the display enhancement film.

In one embodiment, the first light guide layer and the second light guide layer are made of an ultraviolet curable resin. A refractive index of the ultraviolet curable resin is not less than 1.35 and not greater than 1.90.

In one embodiment, the first light guide layer is bonded to the substrate layer by an optical adhesive. The optical adhesive is an optically clear adhesive (OCA) or a pressure sensitive adhesive (PSA).

The present application further provides a display device including a display enhancement film. The display enhancement film includes:
a substrate layer;
a first light guide layer, formed on the substrate layer and including a plurality of light guide structures arranged at intervals and each extending in a strip shape, and the light guide structure including two side surfaces extending in a length direction of the light guide structure, and the side surfaces being arc-shaped; and
a second light guide layer, formed on the first light guide layer, and filling up the first light guide layer, and a refractive index of the first light guide layer being different from that of the second light guide layer.

According to the display enhancement film of the present application, the side surfaces of the light guide structure are arc-shaped, such that when the light emitted by the light source transmits through the light guide structure on the first light guide layer, the light incident on the arc-shaped surface can be refracted at various angles, allowing that the light intensity, contrast, chromaticity and the like of a screen of the display device at all angles have been enhanced, which not only expands the viewing angle, but also eliminates colour cast and increases the frequency domain of the display. Moreover, the display enhancement film according to the present application has a relatively simple structure, is easy to be produced, and also has a low production cost.

### BRIEF DESCRIPTION OF THE DRAWINGS

In order to illustrate the technical solutions in the embodiments of the present application or prior art more clearly, the accompanying drawings used in the description of the embodiments or prior art will be briefly introduced below. Apparently, the accompanying drawings in the following description are only some embodiments of the present application. For those of ordinary skilled in the art, other drawings can also be derived from structures illustrated by these drawings without rendering creative efforts.
FIG. 1 is a structural schematic view of a display enhancement film according to an embodiment of the claimed invention.
FIG. 2 is a structural schematic view of a first light guide layer of the display enhancement film according to an embodiment not forming part of the present invention.
FIG. 3 is a structural schematic view of a first light guide layer of the display enhancement film according to another embodiment not forming part of the present invention.
FIG. 4 is a structural schematic view of a first light guide layer of the display enhancement film according to yet another embodiment of the claimed invention.
FIG. 5 is a schematic arrangement view of a light guide structure of the display enhancement film according to an embodiment of the present application.
FIG. 6 is a schematic arrangement view of a light guide structure of the display enhancement film according to another embodiment of the present application.
FIG. 7 is a structural schematic view of circular light guide regions in the display enhancement film according to an embodiment of the present application.
FIG. 8 is a structural schematic view of circular light guide regions in the display enhancement film according to another embodiment of the present application.
FIG. 9 is a simulation data graph of the display enhancement film according to the present application.
FIG. 10 is a diagram showing the comparison between the simulation data and the experimental data of the display enhancement film according to the present application.

Illustrations for reference numerals:

| Reference Numeral | Name | Reference Numeral | Name | Reference Numeral | Name |
|---|---|---|---|---|---|
| 10 | display enhancement film | 32 | second light guide structure | 342 | second section |
| 20 | substrate layer | 33 | third light guide structure | 343 | third trapezoidal section |
| 30 | first light guide layer | 34 | first light guide structure | 40 | second light guide layer |
| 31 | light guide structure | 341 | first trapezoidal section | 50 | circular light guide area |

The realization of the objectives, functional characteristics, and advantages of the present application, will be further illustrated with reference to the accompanying drawings in conjunction with the embodiments.

### DETAILED DESCRIPTION OF THE EMBODIMENTS

It should be noted that if there are directional indications (such as up, down, left, right, front, back, etc) in the embodiment of the present application, the directional indications are only used to explain the relative positional relationships and movements between various components in a certain posture (as shown in the accompanying drawings). If the certain posture changes, the directional indications also change accordingly.

In addition, if there are descriptions involving "first", "second", etc. in the embodiments of the present application, they are only for descriptive purposes, and cannot be interpreted as indicating or implying their relative importance or implicitly indicating the number of technical features indicated. Thus, the features defined by "first" and "second" may explicitly or implicitly include at least one of these features. In addition, the meaning of "and/or" appearing in the context includes three parallel solutions. Taking "A and/or B" as an example, it includes a solution of A, a solution of B, and a solution of A and B. In addition, the technical solutions of the various embodiments can be combined with each other, but such a combination must be based on the realization being achievable by those skilled in the art. When there is a contradiction in the combination of the technical solutions or the combination cannot be realized, it should be considered that such a combination of the technical solutions does not exist, nor does it within the scope of protection required by the present application.

The present application provides a display enhancement film.

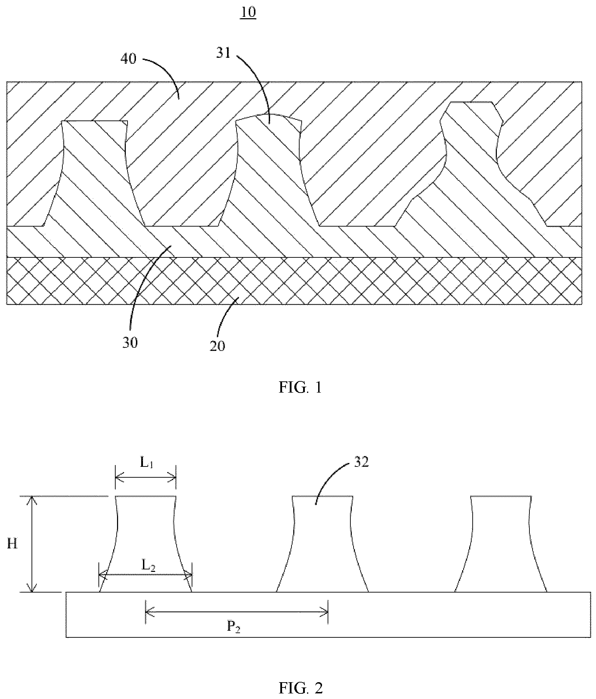

In one embodiment of the present application, as shown in FIG. 1, the display enhancement film 10 includes a substrate layer 20, a first light guide layer 30, and a second light guide layer 40. The substrate layer 20 is configured to support and protect the first light guide layer 30. The substrate layer 20 itself can guide light, and may be made of polyethylene terephthalate (PET), polycarbonate (PC), polymethyl methacrylate (PMMA), Polyethylene naphthalate two formic acid glycol ester (PEN), Cyclo Olefin Polymer (COP), copolymers of cycloolefin (COC), triacetyl cellulose (TAC), low-reflective triacetyl cellulose (LR-TAC), anti-reflective triacetyl cellulose (AR-TAC), etc. Alternatively, glasses, optical devices and the like with a low-reflection or anti-reflection layer are directly used as the substrate layer 20.

In addition, it should be noted that when producing the display enhancement film 10 of the present application, a separate substrate layer 20 may be provided for production, or some optical devices existing in the display device can be used as the substrate layer 20.For example, a polarizer, a brightness enhancement film, or a diffusion film that are generally mounted in the display devices, are directly used as the substrate, so as to be produced with the display devices in a supporting production.

The first light guide layer 30 is formed on the substrate layer 20. The first light guide layer 30 may be made of an ultraviolet (UV) curable resin with a refractive index not less than 1.35 and not greater than 1.90, such as a refractive index of 1.35, 1.40, 1.45, 1.50, 1.55, 1.60, 1.65, 1.70, 1.80, 1.85, 1.90, etc. The first light guide layer 30 is a key structural layer of the display enhancement film 10 of the present application. Specifically, in this embodiment, taking the display synergist film 10 in a horizontal state as an example (the same as below), the first light guide layer 30 includes a plurality of light guide structures 31 arranged at intervals and each extending in a strip shape. The light guide structures 31 protrude upward from an upper surface of the substrate layer 20. Extending lengths of the light guide structures 31, the intervals between the light guide structures 31 and the like may be determined according to the size and the thickness of the required display enhancement film 10. The light guide structure 31 includes two side surfaces extending in its length direction. The side surfaces are arc-shaped. The arc-shaped surfaces may be concave arc-shaped surfaces or convex arc-shaped surfaces. A radian value of the arc surface can be appropriately determined according to an overall size of the light guide structure 31, which is not specifically limited herein, and can be specifically determined by oneself according to comprehensive factors such as production technology and cost.

It can be understood that when light emitted by a light source passes through the light guide structure 31 on the first light guide layer 30, since the side surfaces of the light guide structure 31 are an arc-shaped, the light incident on the arc-shaped surface can be refracted at various angles, so that the light intensity, contrast, chromaticity and the like of a screen of the display device at all angles have been enhanced, and not only the viewing angle is expanded , but also the colour cast is eliminated, and the frequency domain of the display is increased.

However, the refraction of light by the curved surface can cause the light intensity, chromaticity, contrast, etc. at a front viewing angle of the display screen to be weakened. Therefore, in order to prevent the light intensity, chromaticity, contrast etc. at the front viewing angle of the display screen from being greatly weakened, in one embodiment, as shown in FIG. 2, the plurality of light guide structures 31 include second light guide structures 32. A side surface of the second light guide structure 32 is a concave arc surface, and a top surface of the second light guide structure 32 is a flat surface. It can be understood that, when the light passes through the second light guide structure 32, a part of the light can be refracted at various angles by the side surface of the second light guide structure 32, such that the light can be diffused at all angles. Another part of the light can be directly transmitted through the top surface of the second light guide structure 32 without refraction, which effectively avoids the situation that the light intensity, chromaticity, contrast, etc. at the front viewing angle are greatly weakened.

Certainly, it is also possible to adjust a size of gaps between the light guide structures 31, so as to transmit the light directly through the gaps between the light guide structures 31, thereby ensuring the displaying effect of the display screen at the front viewing angle.

In another embodiment, the plurality of light guide structures 31 further include a third light guide structure 33. A side surface of the third light guide structure 33 is a concave arc surface, and a top surface of the third light guide structure 33 is an arc surface, which may be a convex arc surface, or a concave arc surface. It should be noted that when the top surface is an arc surface, a radian thereof should not be too large. A top surface with a small radian will not have a great impact on the function of the light guide structure 31, but will bring some performance improvements instead.

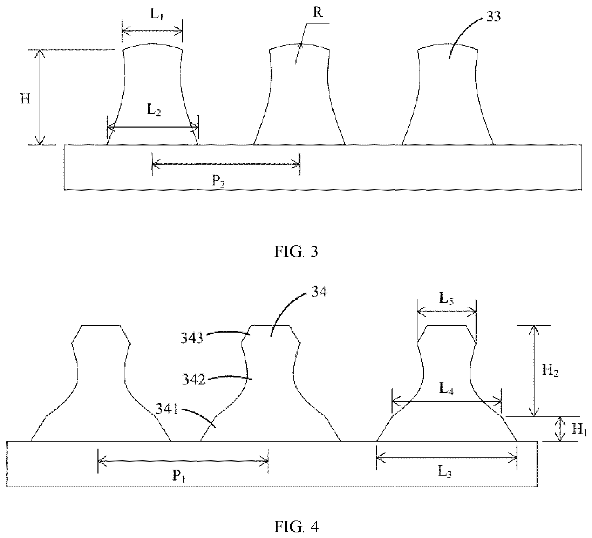

For example, in one embodiment, as shown in FIG. 3, the top surface of the third light guide structure 33 is a convex arc surface. The radian R of the convex arc surface is not less than 4 microns and not greater than 10 microns. Specifically, R may be 4 microns, 5 microns, 6 microns, 8 microns, 10 microns and so on. A center of the convex arc surface is located on a center line of a bottom surface of the third light guide structure 33. As shown in Table 1 below, when the display enhancement film 10 having the third light guide structure 33 is applied to a display screen, the light intensity attenuation of the display screen at the front viewing angle is less than 15%. A light intensity ratio of the light intensity at the angles of ±30° and ±35° to the light intensity at the front viewing angle is greater than 80%. A light intensity ratio of the light intensity at the angles of ±60° and ±65° to the light intensity at the front viewing angle is greater than 40%. In addition, a ratio of the contrast ratio intensity of the light at the angles of ±30° and ±35° to the contrast ratio intensity of the light at the front viewing angle is greater than 85%. That is, it is ensured that the displaying effect at the front viewing angle will not be greatly decreased while enhancing the displaying effect at other viewing angles of the display screen.

**Table 1: performance test data of the display enhancement film of the present application**

| # | Display enhancement Film | | | | Test Method |
|---|---|---|---|---|---|
| | Absolute Value | Ratio of Intensity | | | |
| | | | | | |
| Optical Performance | W255 | (0,0) | 157.2 | / | Eldim 80 |
| | | ±30°/0° | 135 | >80% | |
| | | ±60°/0° | 65.7 | >40% | |
| | CR | (0,0) | 553.8 | / | |
| | | ±30°/0° | 534.4 | >85% | |
| | Skin viewing angle | | 0.007° | | |
| | Dark viewing angle | | <1.5° | | |
| | Total Light Transmittance | | 92.40% | | ASTM D 1003 |
| | Haze | | 5.00% | | ASTM D 1003 |
| | Hue a | | -1.5 (NBS) | | |
| | Hue b | | 4.0 (NBS) | | |
| | Average Tilt Angle | | 14.2° | | Olympus Microscope |
| Pencil Hardness | HB | | | | Load 750g |
| Abrasion Resistance | ≤15 Scratches | | | | Steel Wool#0000, Load 1.5kg |
| Rainbow Pattern | No | | | | Visual Inspection |

The second light guide layer 40 is formed on the first light guide layer 30 and fills up the first light guide layer 30. The second light guide layer 40 can also protect the first light guide layer 30 to some extent. The second light guide layer 40 may also be made of ultraviolet curable resin with a refractive index not less than 1.35 and not greater than 1.90. For example, the refractive index is 1.35, 1.40, 1.45, 1.50, 1.55, 1.60, 1.65, 1.70, 1.80, 1.85, 1.90 and so on. However, the refractive indices of the first light guide layer 30 and the second light guide layer 40 need to be set differently, so as to avoid the fusing of the first light guide layer and the second light guide layer, and avoid affecting the performance of the display enhancement film 10.

In addition, the second light guide layer 40 may be also formed with an anti-glare layer by a corresponding chemical process, while the second light guide layer 40 fills up the first light guide layer 30, so that the display enhancement film 10 also has an anti-glare function. The second light guide layer 40 can also be directly made into a specular bright structure, or the second light guide layer 40 may be processed correspondingly according to other functions that need to be realized, as long as it does not affect the light diffusion realized by the first light guide layer 30.

Moreover, the display enhancement film 10 according to the present application has a relatively simple structure, so that the production difficulty of the display enhancement film 10 is greatly reduced, and the display enhancement film 10 also has a low production cost. During specific production, it is only necessary to manufacture corresponding textured rolls according to the required shape of the light guide structure 31 and perform UV roll-to-roll imprinting. Specifically, the display enhancement film 10 according to the present application may be produced according to the following process steps.

S1: According to the specific shape of the light guide structure 31, corresponding texture rollers are provided.

According to actual needs, the shape of the light guide structure to be produced (such as a multi-step structure) may be determined, and corresponding molds, textured rollers, etc. may be manufactured according to the determined shape of the light guide structure, for preparing for the subsequent steps.

S2: TrichloroSilane material is used, and anti-sticking processing and surface passivation processing are performed on the textured rollers by chemical vapor deposition (CVD) technology.

It should be noted that, in order to make surface flatness of the produced light guide structure 31 reach the optical grade level, special anti-sticking and surface passivation processing may be performed on the textured rollers before imprinting. Specifically, TrichloroSilane material may be used to process surfaces of the textured rollers by CVD process.

S3: The textured rollers are used to roll film material to obtain a mother film.

S4: The master film is used as a mold, and UV roll-to-roll nanoimprinting is performed to obtain a first-generation mother film.

S5: The first-generation mother film is then used as a mold, and the UV roll-to-roll nanoimprinting is performed to obtain the first light guide layer.

It should be noted that, due to the high aspect ratio of the produced structure, prior to nanoimprinting, it is necessary to pre-coat the first-generation mother film (by using a soft mold), that is, a coated anilox roller is used to perform gluing so that micro-nano structures in the first-generation mother film is filled with UV resin, to obtain the first light guide layer 30, and then the first light guide layer 30 and the substrate material are imprinted together.

S6: The second light guide layer 40 is formed on the first light guide layer 30 by UV imprinting.

In this step, the second light guide layer 40 may be processed accordingly as needed, for example, the second light guide layer may be formed with an AG (anti-glare glass) anti-glare structure, a mirror bright structure, an abnormal-shaped special optical function structure, etc., through processing.

S7: A protective film is covered, and a finished product is die-cut.

Therefore, the display enhancement film 10 of the present application not only enhances the light intensity, contrast, chromaticity, etc. of the display screen of the display device at all angles, thereby expanding the viewing angle, but also eliminates colour cast and increases the frequency domain of the display. Moreover, the structure is simple, easy to produce, and the cost is low.

In one embodiment, as shown in FIG. 2 or FIG. 3, in order to allow light to be refracted from the arc-shaped surface of the light guide structure 31, a distance between the two side surfaces at the top of the light guide structure 31 is less than a distance between the two side surfaces at the bottom of the light guide structure 31. That is, the light guide structure 31 is approximately trapezoidal, so that the two side surfaces of the light guide structure 31 are relatively inclined, thereby refracting more light and enhancing the displaying effect of the display screen at all angles.

The distance L₁ between the two side surfaces at the top of the light guide structure 31 is not less than 5 microns and not greater than 19 microns, which may be 5 microns, 9 microns, 15 microns, 19 microns and so on. The distance L₂ between the two side surfaces at the bottom of the light guide structure 31 is not less than 10 microns and not greater than 35 microns. For example, L₂ is 10 microns, 15 microns, 20 microns, 30 microns, 35 microns and so on. A height H of the light guide structure 31 is not less than 8 microns and not greater than 20 microns, and may be 8 microns, 12 microns, 16 microns, 20 microns, and so on.

As shown in the test statistics in Table 1, the light guide structure 31 with the above size range can cause the light intensity attenuation of the display screen at the front viewing angle to be less than 15%. A light intensity ratio of the light intensity at the angles of ±30° and ±35° to the light intensity at the front view is greater than 80%. A light intensity ratio of the light intensity at the angles of ±60° and ±65° to the light intensity at the front viewing angle is greater than 40%. A ratio of the contrast ratio intensity of the light at the angles of ±30° and ±35° to the contrast ratio intensity of the light at the front viewing angle is greater than 85%.

It should be noted that when the top surface of the light guide structure 31 is a flat surface, "the distance between the tops of the light guide structure 31" refers to the width of the flat surface; and when the top surface of the light guide structure 31 is an arc surface, "the distance between the tops of the light guide structure 31" refers to the distance between intersection lines between the arc surface and the two side surfaces (the same as below).

Similarly, when the top surface of the light guide structure 31 is a flat surface, the "the height of the light guide structure 31" refers to the average distance between the flat surface and the bottom surface. When the top surface of the light guide structure 31 is a flat surface and the flat surface has a certain inclination angle, "the height of the light guide structure 31" refers to the maximum distance between the flat surface and the bottom surface. When the top surface of the light guide structure 31 is an arc surface, "the height of the light guide structure 31" refers to the distance between the intersection lines between the two side surfaces and the arc surface, and the bottom surface (the same as below).

In one embodiment, as shown in FIG. 4, the plurality of light guide structures 31 further include a first light guide structure 34. The first light guide structure 34 is a multi-step structure and includes a first trapezoidal section 341, a second section 342, and a third trapezoidal section 343 that are stacked from bottom to top. A side surface of the second section 342 is an arc surface. The arc surface is a concave arc surface.

A height H₁ of the first trapezoidal section 341 is not less than 2 microns and not greater than 10 microns, for example, which may be 2 microns, 4 microns, 6 microns, 8 microns, 10 microns and so on. A total height H₂ of the second section 342 and the third trapezoidal section 343 is not less than 10 microns and not greater than 20 microns, that is, H₂ may be 10 microns, 12 microns, 14 microns, 16 microns, 18 microns, 20 microns and so on.

In addition, on a cross section of the light guide structure 31, a width L₃ of a bottom edge of the first trapezoidal section 341 is not less than 15 microns and not greater than 22 microns, for example, which may be 15 microns, 17 microns, 20 microns, 22 microns, and so on. A width L₄ of a bottom edge of the second section 342 is not less than 10 microns and not greater than 21 microns, that is, L₄ may be 10 microns, 12 microns, 15 microns, 18 microns, 21 microns, and so on. A width L₅ of a bottom edge of the third trapezoidal section 343 is not less than 5 microns and not greater than 19 microns, and which may be 5 microns, 7 microns, 10 microns, 14 microns, 19 microns and so on.

As shown in the test statistics in Table 1, the light guide structure 31 having the above size range can cause the light intensity attenuation of the display screen at the front viewing angle to be less than 15%. A light intensity ratio of the light intensity at the angles of ±30° and ±35° to the light intensity at the front viewing angle is greater than 80%. A light intensity ratio of the light intensity at the angles of ±60° and ±65° to the light intensity at the front viewing angle is greater than 40%. A ratio of the contrast ratio intensity of the light at the angles of ±30° and ±35° to the contrast ratio intensity of the light at the front viewing angle is greater than 85%, such that the viewer can obtain a more vivid and bright viewing experience at all angles of the display screen.

In another embodiment, the height H₁ of the first trapezoidal section 341 is not less than 4 microns and not greater than 7 microns, that is, H₁ may be 4 microns, 5.5 microns, 6 microns, 7 microns, and so on. The total height H₂ of the second section 342 and the third trapezoidal section 343 is not less than 12 microns and not greater than 17 microns. For example, H₂ is 12 microns, 13.5 microns, 15 microns, 17 microns and so on. In addition, on the cross-section of the light guide structure 31, the width L₃ of the bottom edge of the first trapezoidal section 341 is not less than 17 microns and not greater than 20 microns, and the width L₄ of the bottom edge of the second section 342 is not less than 13 microns and not greater than 18 microns, and the width L₅ of the bottom edge of the third trapezoidal section 343 is not less than 8 microns and not greater than 13 microns. In addition, on the basis of the light guide structures 31 having the above size range, in the arrangement direction of the light guide structures 31, when a distance P₁ between centers of two adjacent light guide structures 31 is not less than 22 microns and not greater than 28 microns, a better enhancement effect can be achieved. P1 may be 22 microns, 24 microns, 26 microns, 28 microns, and so on, which can be set according to actual conditions.

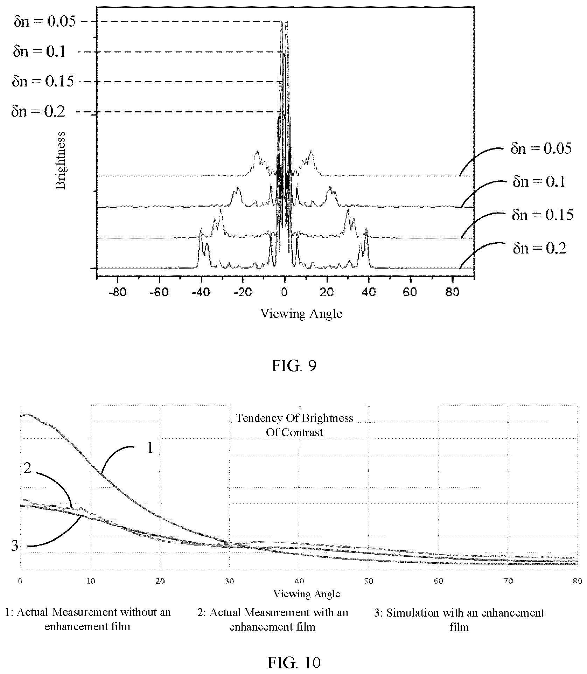

In one embodiment, as shown in FIG. 9, after simulation, when the refractive index of the first light guide layer 30 is greater than the refractive index of the second light guide layer 40, and when a difference δn between the refractive index of the first light guide layer 30 and the refractive index of the second light guide layer 40 is not less than 0.05 and not greater than 0.4, it indicates that the enhancement effect of the display enhancement film 10 is better. Specifically, the difference δn may be 0.05, 0.1, 0.13, 0.135, 0.14, 0.145, 0.15, 0.2, 0.25, 0.3, 0.35, 0.4 and so on.

In addition, as shown in FIG. 10, the graph involves the theoretical simulation data and the experimental data of a real test, with and without the display enhancement film 10. As can be seen from the graph, the experimental data are in good agreement with the simulation data, that is, the display enhancement film 10 according to the present application has achieved the expected enhancement effect in actual applications.

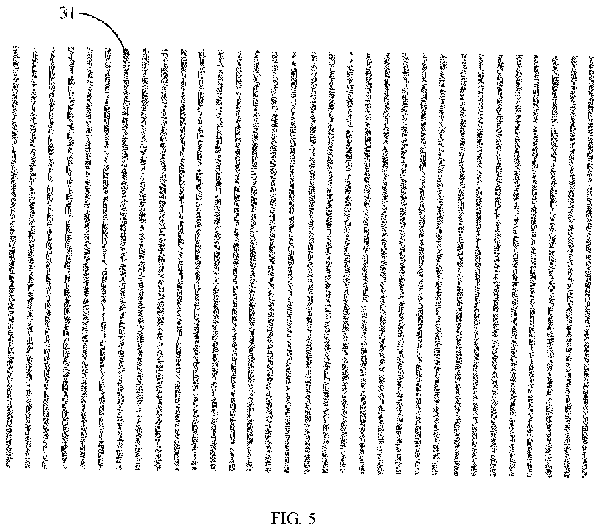

In one embodiment, as shown in FIGS. 2, 3, and 5, in the arrangement direction of the light guide structures 31, a distance P₂ between centers of two adjacent light guide structures 31 is not less than 12 microns and not greater than 50 microns. For example, the distance P₂ may be 12 microns, 25 microns, 35 microns, 50 microns and so on, which can be specifically set as needed according to the required size of the display enhancement film 10.

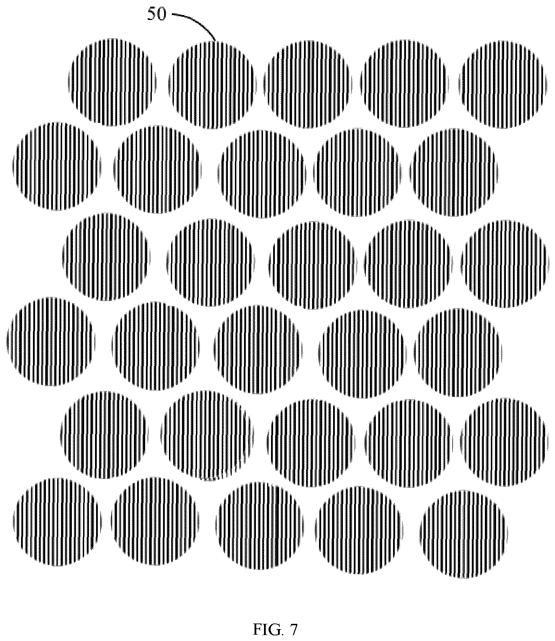

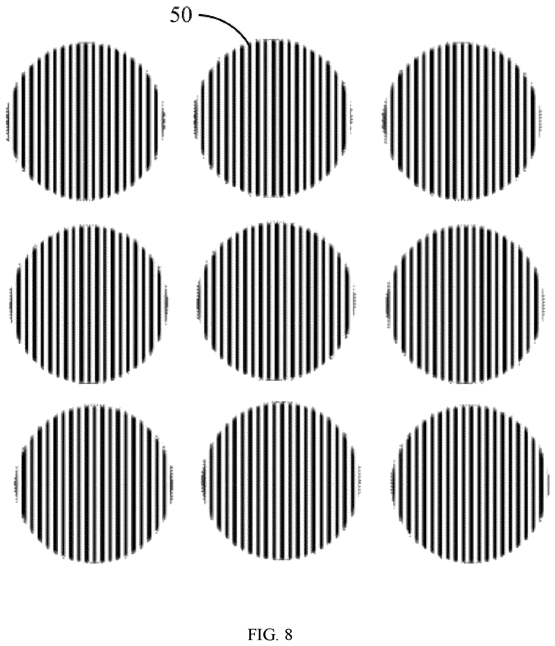

In one embodiment, as shown in FIGS. 7 and 8, the plurality of the light guide structures 31 are arranged to form a circular light guide area 50. A plurality of the circular light guide areas 50 are arranged on the first light guide layer 30. The plurality of circular light guide areas 50 may be arranged in multiple rows, and the multiple rows of circular light guide areas 50 may be distributed in a staggered manner, for example, distributed in a staggered manner in a column direction. Certainly, the plurality of circular light guide areas 50 can also be arranged in an array, so that the display enhancement film 10 is easier to be produced.

It can be understood that when the plurality of light guide structures 31 are arranged to form the circular light guide areas 50, not only the light can be diffused from the circular light guide areas 50 at all angles, but also other light can be directly transmitted through gaps between the circular light guide areas 50. In this way, it can ensure the displaying effect at the front viewing angle, and avoid a large attenuation of the light intensity, contrast, chromaticity etc. at the front viewing angle, while the displaying effects of the display screen at other angles are improved.

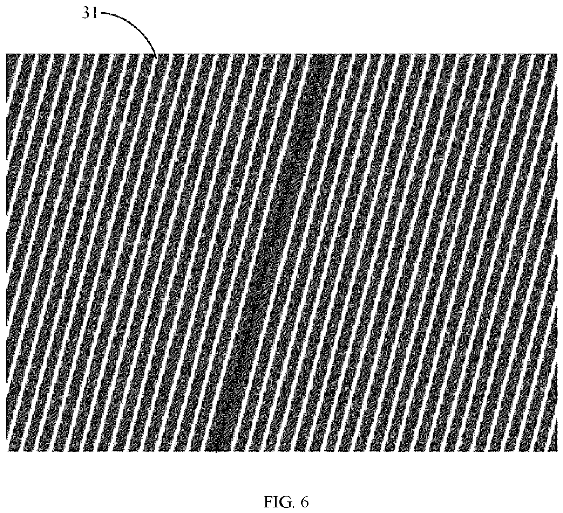

In one embodiment, as shown in FIG. 6, an extending direction of the light guide structure 31 is inclined relative to a film edge of the display enhancement film 10. For example, taking the display enhancement film 10 as a regular directional film as an example, the extending direction of the light guide structure 31 may be inclined relative to the film edge of the display enhancement film 10 according to the size of the display screen or display device to which the display enhancement film 10 is applied. The inclined angle is not limited herein, which may be 4°, 8°, 15°, 17°, and so on, and which can be set according to the actual situations.

The present application further provides a display device. The display device includes a display enhancement film 10. For the specific structure of the display enhancement film 10, reference may be made to the above-mentioned embodiments. Since this display device adopts all the technical solutions of all the above-mentioned embodiments, this display device has at least all the beneficial effects brought by the technical solutions of the above embodiments, and which will not be repeated herein.

The display device may be a thin film transistor liquid crystal display (TFT-LCD display), a light emitting diode (LED) display, an organic light-emitting diode (OLED) display, a cathode ray tube (CRT) display, a 3D display, a quantum dot display, twisted nematic (TN) display, a touch screen, etc., the resolution of the display device is not limited, and the display enhancement film 10 of the present application may be applied to all displays with resolutions in a range from 4K to 8K.

An assembled position of the display enhancement film 10 in the display device is also not limited, and generally needs to be assembled in a direction in which the light is emitted. For example, in one embodiment, the display device includes a front cover and a display module. The display enhancement film 10 may be directly attached to the front cover (that is, directly attached to the screen), or may be assembled between the display module and the front cover, and specifically, the display enhancement film 10 may be specifically assembled as needed.

The above only illustrates preferred embodiments of the present application, and does not limit the patent scopes of the present application. Within the application concepts of the present application, the equivalent structural transformation made by using the description of the present application and the contents shown in the accompanying drawings, or direct or indirect applications to other relevant technical fields, are all included in the patent protection scope of the present application, as long as they are covered by the appended independent claim.

## Claims

1. A display enhancement film (10), comprising:
a substrate layer (20);
a first light guide layer (30), formed on the substrate layer (20) and comprising a plurality of light guide structures (31) arranged at intervals and each extending in a strip shape, and
the light guide structure (31) comprising two side surfaces extending in a length direction of the light guide structure (31), and the side surfaces being arc-shaped; and
a second light guide layer (40), formed on the first light guide layer (30), filling up the first light guide layer (30), and a refractive index of the first light guide layer (30) being different from that of the second light guide layer (40);
wherein the plurality of light guide structures (31) further comprises a first light guide structure (34); the first light guide structure (34) is a multi-step structure, and includes a first trapezoidal section (341), a second section (342) and a third trapezoidal section (343) that are stacked from bottom to top; and a side surface of the second section (342) is an arc surface.

2. The display enhancement film (10) according to claim 1, wherein the plurality of light guide structures (31) comprises a second light guide structure (32); and a side surface of the second light guide structure (32) is a concave arc surface, and a top surface of the second light guide structure (32) is a flat surface.

3. The display enhancement film (10) according to claim 1, wherein the plurality of light guide structures (31) further comprise a third light guide structure (33); and a side surface of the third light guide structure (33) is a concave arc surface, and a top surface of the third light guide structure (33) is an arc surface.

4. The display enhancement film (10) according to claim 3, wherein the top surface of the third light guide structure (33) is a convex arc surface; and a radian of the convex arc surface is not less than 4 microns and not greater than 10 microns.

5. The display enhancement film (10) according to claim 2, wherein a distance between the two side surfaces at the top of the light guide structure (31) is less than a distance between the two side surfaces at the bottom of the light guide structure (31);
preferably, a height of the light guide structure (31) is not less than 8 microns and not greater than 20 microns; and
the distance between the two side surfaces at the top of the light guide structure (31) is not less than 5 microns and not greater than 19 microns; and the distance between the two side surfaces at the bottom of the light guide structure (31) is not less than 10 microns and not greater than 35 microns.

6. The display enhancement film (10) according to claim **1,** wherein a height (H₁) of the first trapezoidal section (341) is not less than 2 microns and not greater than 10 microns, and a total height (H₂) of the second trapezoidal section (342) and the third trapezoidal section (343) is not less than 10 microns and not greater than 20 microns; and
on a cross section of the light guide structure (31), a width (L₃) of a bottom edge of the first trapezoidal section (341) is not less than 15 microns and not greater than 22 microns, a width (L₄) of a bottom edge of the second trapezoidal section (342) is not less than 10 microns and not greater than 21 microns, and a width (L₅) of a bottom edge of the third trapezoidal section (343) is not less than 5 microns and not greater than 19 microns; or
a height (H₁) of the first trapezoidal section (341) is not less than 4 microns and not greater than 7 microns, and a total height (H₂) of the second trapezoidal section (342) and the third trapezoidal section (343) is not less than 12 microns and not greater than 17 microns; and on a cross section of the light guide structure (31), a width (L₃) of a bottom edge of the first trapezoidal section (341) is not less than 17 microns and not greater than 20 microns; a width (L₄) of a bottom edge of the second trapezoidal section (342) is not less than 13 microns and not greater than 18 microns; and a width (L₅) of a bottom edge of the third trapezoidal section (343) is not less than 8 microns and not greater than 13 microns.

7. The display enhancement film (10) according to claim 6, wherein in an arrangement direction of the light guide structures (31), a distance between centers (P₁) of two adjacent light guide structures (31) is not less than 22 microns and not greater than 28 microns.

8. The display enhancement film (10) according to claim 7, wherein: the refractive index of the first light guide layer (30) is greater than that of the second light guide layer (40); and a difference (δn) between the refractive index of the first light guide layer (30) and the refractive index of the second light guide layer (40) is not less than 0.05 and not greater than 0.4;
preferably, the first light guide layer (30) and the second light guide layer (40) are made of an ultraviolet curable resin; and a refractive index of the ultraviolet curable resin is not less than 1.35 and not greater than 1.90.

9. The display enhancement film (10) according to any one of claims 1 to 6, wherein in an arrangement direction of the light guide structures (31), a distance (P₂) between centers of two adjacent light guide structures (31) is not less than 12 microns and not greater than 50 microns.

10. The display enhancement film (10) according to any one of claims 1 to 8, wherein the plurality of the light guide structures (31) are arranged to form a circular light guide area (50); and a plurality of the circular light guide areas (50) are arranged on the first light guide layer (30).

11. The display enhancement film (10) according to claim 10, wherein a plurality of rows of circular light guide areas (50) are arranged on the first light guide layer (30).

12. The display enhancement film (10) according to claim 10, wherein the plurality of circular light guide areas (50) are arranged in an array.

13. The display enhancement film (10) according to any one of claims 1 to 8, wherein an extending direction of the light guide structure (31) is inclined relative to a film edge of the display enhancement film (10).

14. A display device, comprising the display enhancement film (10) according to any one of claims 1 to 13.

## Patentansprüche

1. Displayverbesserungsfolie (10), umfassend:
eine Substratschicht (20);
eine erste Lichtleiterschicht (30), die auf der Substratschicht (20) ausgebildet ist und umfasst eine Vielzahl von in Abständen angeordneten, sich jeweils streifenförmig erstreckenden Lichtleiterstrukturen (31), und die Lichtleiterstruktur (31) umfassend zwei Seitenflächen, die sich in Längsrichtung der Lichtleiterstruktur (31) erstrecken, und wobei die Seitenflächen bogenförmig sind; und
eine zweite Lichtleiterschicht (40), die auf der ersten Lichtleiterschicht (30) ausgebildet ist, die erste Lichtleiterschicht (30) ausfüllt, und ein Brechungsindex der ersten Lichtleiterschicht (30) sich von dem der zweiten Lichtleiterschicht (40) unterscheidet;
wobei die Vielzahl von Lichtleiterstrukturen (31) ferner umfasst eine erste Lichtleiterstruktur (34); die erste Lichtleiterstruktur (34) ist eine mehrstufige Struktur, und beinhaltet einen ersten trapezförmigen Abschnitt (341), einen zweiten Abschnitt (342) und einen dritten trapezförmigen Abschnitt (343), die von unten nach oben übereinander angeordnet sind; und eine Seitenfläche des zweiten Abschnitts (342) ist eine Bogenfläche.

2. Displayverbesserungsfolie (10) gemäß Anspruch 1, wobei die Vielzahl von Lichtleiterstrukturen (31) umfasst eine zweite Lichtleiterstruktur (32); und eine Seitenfläche der zweiten Lichtleiterstruktur (32) ist eine konkave Bogenfläche, und eine Oberseite der zweiten Lichtleiterstruktur (32) ist eine ebene Fläche.

3. Displayverbesserungsfolie (10) gemäß Anspruch 1, wobei die Vielzahl von Lichtleiterstrukturen (31) ferner umfasst eine dritte Lichtleiterstruktur (33); und eine Seitenfläche der dritten Lichtleiterstruktur (33) ist eine konkave Bogenfläche, und eine Oberseite der dritten Lichtleiterstruktur (33) ist eine Bogenfläche.

4. Displayverbesserungsfolie (10) gemäß Anspruch 3, wobei die Oberseite der dritten Lichtleiterstruktur (33) eine konvexe Bogenfläche ist; und ein Radius der konvexen Bogenfläche nicht kleiner als 4 Mikrometer und nicht größer als 10 Mikrometer ist.

5. Displayverbesserungsfolie (10) gemäß Anspruch 2, wobei ein Abstand zwischen den beiden Seitenflächen an der Oberseite der Lichtleiterstruktur (31) kleiner ist als ein Abstand zwischen den beiden Seitenflächen an der Unterseite der Lichtleiterstruktur (31);
vorzugsweise beträgt eine Höhe der Lichtleiterstruktur (31) nicht weniger als 8 Mikrometer und nicht mehr als 20 Mikrometer; und
der Abstand zwischen den beiden Seitenflächen an der Oberseite der Lichtleiterstruktur (31) beträgt nicht weniger als 5 Mikrometer und nicht mehr als 19 Mikrometer; und der Abstand zwischen den beiden Seitenflächen an der Unterseite der Lichtleiterstruktur (31) beträgt nicht weniger als 10 Mikrometer und nicht mehr als 35 Mikrometer.

6. Displayverbesserungsfolie (10) gemäß Anspruch 1, wobei eine Höhe (H₁) des ersten trapezförmigen Abschnitts (341) nicht weniger als 2 Mikrometer und nicht mehr als 10 Mikrometer beträgt, und eine Gesamthöhe (H₂) des zweiten trapezförmigen Abschnitts (342) und des dritten trapezförmigen Abschnitts (343) nicht kleiner als 10 Mikrometer und nicht größer als 20 Mikrometer ist; und im Querschnitt der Lichtleiterstruktur (31) eine Breite (L₃) einer Unterkante des ersten trapezförmigen Abschnitts (341) nicht kleiner als 15 Mikrometer und nicht größer als 22 Mikrometer ist, eine Breite (L₄) einer Unterkante des zweiten trapezförmigen Abschnitts (342) beträgt nicht weniger als 10 Mikrometer und nicht mehr als 21 Mikrometer, und eine Breite (L₅) einer Unterkante des dritten trapezförmigen Abschnitts (343) beträgt nicht weniger als 5 Mikrometer und nicht mehr als 19 Mikrometer; oder
eine Höhe (H₁) des ersten trapezförmigen Abschnitts (341) beträgt nicht weniger als 4 Mikrometer und nicht mehr als 7 Mikrometer, und eine Gesamthöhe (H₂) des zweiten trapezförmigen Abschnitts (342) und des dritten trapezförmigen Abschnitts (343) beträgt nicht weniger als 12 Mikrometer und nicht mehr als 17 Mikrometer; und
im Querschnitt der Lichtleiterstruktur (31) beträgt eine Breite (L₃) einer Unterkante des ersten trapezförmigen Abschnitts (341) nicht weniger als 17 Mikrometer und nicht mehr als 20 Mikrometer; eine Breite (L₄) einer Unterkante des zweiten trapezförmigen Abschnitts (342) beträgt nicht weniger als 13 Mikrometer und nicht mehr als 18 Mikrometer; und eine Breite (L₅) einer Unterkante des dritten trapezförmigen Abschnitts (343) beträgt nicht weniger als 8 Mikrometer und nicht mehr als 13 Mikrometer.

7. Displayverbesserungsfolie (10) gemäß Anspruch 6, wobei in einer Anordnungsrichtung der Lichtleiterstrukturen (31) ein Abstand zwischen den Mittelpunkten (P₁) zweier benachbarter Lichtleiterstrukturen (31) nicht kleiner als 22 Mikrometer und nicht größer als 28 Mikrometer ist.

8. Displayverbesserungsfolie (10) gemäß Anspruch 7, wobei:
der Brechungsindex der ersten Lichtleiterschicht (30) größer ist als der der zweiten Lichtleiterschicht (40);
und eine Differenz (δn) zwischen dem Brechungsindex der ersten Lichtleiterschicht (30) und dem Brechungsindex der zweiten Lichtleiterschicht (40) nicht kleiner als 0,05 und nicht größer als 0,4 ist;
vorzugsweise bestehen die erste Lichtleiterschicht (30) und die zweite Lichtleiterschicht (40) aus einem Ultraviolett-härtbaren Harz; und der Brechungsindex des Ultraviolett-härtbaren Harzes beträgt nicht weniger als 1,35 und nicht mehr als 1,90.

9. Displayverbesserungsfolie (10) gemäß mindestens einem der Ansprüche 1 bis 6, wobei in einer Anordnungsrichtung der Lichtleiterstrukturen (31), ein Abstand (P₂) zwischen den Mittelpunkten zweier benachbarter Lichtleiterstrukturen (31) nicht kleiner als 12 Mikrometer und nicht größer als 50 Mikrometer ist.

10. Displayverbesserungsfolie (10) gemäß mindestens einem der Ansprüche 1 bis 8, wobei die Vielzahl von Lichtleiterstrukturen (31) so angeordnet sind, dass sie einen kreisförmigen Lichtleiterbereich (50) bilden; und eine Vielzahl der kreisförmigen Lichtleiterbereiche (50) sind auf der ersten Lichtleiterschicht (30) angeordnet.

11. Displayverbesserungsfolie (10) gemäß Anspruch 10, wobei eine Vielzahl von Reihen kreisförmiger Lichtleiterbereiche (50) auf der ersten Lichtleiterschicht (30) angeordnet sind.

12. Displayverbesserungsfolie (10) gemäß Anspruch 10, wobei die Vielzahl von kreisförmigen Lichtleiterbereiche (50) in einem Array angeordnet sind.

13. Displayverbesserungsfolie (10) gemäß mindestens einem der Ansprüche 1 bis 8, wobei eine Erstreckungsrichtung der Lichtleiterstruktur (31) relativ zu einer Folienkante der Displayverbesserungsfolie (10) geneigt ist.

14. Displayvorrichtung, umfassend die Displayverbesserungsfolie (10) gemäß mindestens einem der Ansprüche 1 bis 13.

## Revendications

1. Film d'amélioration d'affichage (10), comprenant :
une couche de substrat (20) ;
une première couche de guidage de lumière (30), formée sur la couche de substrat (20) et comprenant une pluralité de structures de guidage de lumière (31) disposées à intervalles et s'étendant chacune selon une forme de bande, et la structure de guidage de lumière (31) comprenant deux surfaces latérales s'étendant dans une direction longitudinale de la structure de guidage de lumière (31), et les surfaces latérales étant en forme d'arc ; et
une deuxième couche de guidage de lumière (40), formée sur la première couche de guidage de lumière (30), remplissant la première couche de guidage (30), et un indice de réfraction de la première couche de guidage de lumière (30) étant différent de celui de la deuxième couche de guidage de lumière (40) ;
dans lequel la pluralité de structures de guidage de lumière (31) comprend en outre une première structure de guidage de lumière (34) ; la première structure de guidage de lumière (34) est une structure à plusieurs paliers, et inclut une première section trapézoïdale (341), une deuxième section (342) et une troisième section trapézoïdale (343) qui sont empilées du bas vers le haut ; et une surface latérale de la deuxième section (342) est une surface en arc.

2. Film d'amélioration d'affichage (10) selon la revendication 1, dans lequel la pluralité de structures de guidage de lumière (31) comprend une deuxième structure de guidage de lumière (32) ; et une surface latérale de la deuxième structure de guidage de lumière (32) est une surface en arc concave, et une surface supérieure de la deuxième structure de guidage de lumière (32) est une surface plane.

3. Film d'amélioration d'affichage (10) selon la revendication 1, dans lequel la pluralité de structures de guidage de lumière (31) comprend en outre une troisième structure de guidage de lumière (33) ; et une surface latérale de la troisième structure de guidage de lumière (33) est une surface en arc concave, et une surface supérieure de la troisième structure de guidage de lumière (33) est une surface en arc.

4. Film d'amélioration d'affichage (10) selon la revendication 3, dans lequel la surface supérieure de la troisième structure de guidage de lumière (33) est une surface en arc convexe ; et un radian de la surface en arc convexe est non inférieur à 4 microns et non supérieur à 10 microns.

5. Film d'amélioration d'affichage (10) selon la revendication 2, dans lequel une distance entre les deux surfaces latérales au sommet de la structure de guidage de lumière (31) est inférieure à une distance entre les deux surfaces latérales au bas de la structure de guidage de lumière (31) ;
de préférence, une hauteur de la structure de guidage de lumière (31) est non inférieure à 8 microns et non supérieure à 20 microns ; et
la distance entre les deux surfaces latérales au sommet de la structure de guidage de lumière (31) est non inférieure à 5 microns et non supérieure à 19 microns ; et la distance entre les deux surfaces latérales au bas de la structure de guidage de lumière (31) est non inférieure à 10 microns et non supérieure à 35 microns.

6. Film d'amélioration d'affichage (10) selon la revendication 1, dans lequel une hauteur (H₁) de la première section trapézoïdale (341) est non inférieure à 2 microns et non supérieure à 10 microns, et une hauteur totale (H₂) de la deuxième section trapézoïdale (342) et de la troisième section trapézoïdale (343) est non inférieure à 10 microns et non supérieure à 20 microns ; et
sur une section transversale de la structure de guidage de lumière (31), une largeur (L₃) d'un bord inférieur de la première section trapézoïdale (341) est non inférieure à 15 microns et non supérieure à 22 microns, une largeur (L₄) d'un bord inférieur de la deuxième section trapézoïdale (342) est non inférieure à 10 microns et non supérieure à 21 microns, et une largeur (L₅) d'un bord inférieur de la troisième section trapézoïdale (343) est non inférieure à 5 microns et non supérieure à 19 microns ; ou
une hauteur (H₁) de la première section trapézoïdale (341) est non inférieure à 4 microns et non supérieure à 7 microns, et une hauteur totale (H₂) de la deuxième section trapézoïdale (342) et de la troisième section trapézoïdale (343) est non inférieure à 12 microns et non supérieure à 17 microns ; et
sur une section transversale de la structure de guidage de lumière (31), une largeur (L₃) d'un bord inférieur de la première section trapézoïdale (341) est non inférieure à 17 microns et non supérieure à 20 microns ; une largeur (L₄) d'un bord inférieur de la deuxième section trapézoïdale (342) est non inférieure à 13 microns et non supérieure à 18 microns ; et une largeur (L₅) d'un bord inférieur de la troisième section trapézoïdale (343) est non inférieure à 8 microns et non supérieure à 13 microns.

7. Film d'amélioration d'affichage (10) selon la revendication 6, dans lequel, dans une direction de disposition des structures de guidage de lumière (31), une distance entre les centres (P₁) de deux structures de guidage de lumière (31) adjacentes est non inférieure à 22 microns et non supérieure à 28 microns.

8. Film d'amélioration d'affichage (10) selon la revendication 7, dans lequel : l'indice de réfraction de la première couche de guidage de lumière (30) est supérieur à celui de la deuxième couche de guidage de lumière (40) ; et une différence (δn) entre l'indice de réfraction de la première couche de guidage de lumière (30) et l'indice de réfraction de la deuxième couche de guidage de lumière (40) est non inférieure à 0,05 et non supérieure à 0,4 ;
de préférence, la première couche de guidage de lumière (30) et la deuxième couche de guidage de lumière (40) sont constituées d'une résine durcissable aux ultraviolets ; et un indice de réfraction de la résine durcissable aux ultraviolets est non inférieur à 1,35 et non supérieur à 1,90.

9. Film d'amélioration d'affichage (10) selon l'une quelconque des revendications 1 à 6, dans lequel, dans une direction de disposition des structures de guidage de lumière (31), une distance (P₂) entre les centres de deux structures de guidage de lumière (31) adjacentes est non inférieure à 12 microns et non supérieure à 50 microns.

10. Film d'amélioration d'affichage (10) selon l'une quelconque des revendications 1 à 8, dans lequel la pluralité des structures de guidage de lumière (31) sont disposées de manière à former une zone circulaire de guidage de lumière (50) ; et une pluralité des zones circulaires de guidage de lumière (50) sont disposées sur la première couche de guidage de lumière (30).

11. Film d'amélioration d'affichage (10) selon la revendication 10, dans lequel une pluralité de rangées de zones circulaires de guidage de lumière (50) sont disposées sur la première couche de guidage de lumière (30).

12. Film d'amélioration d'affichage (10) selon la revendication 10, dans lequel la pluralité de zones circulaires de guidage de lumière (50) sont disposées en matrice.

13. Film d'amélioration d'affichage (10) selon l'une quelconque des revendications 1 à 8, dans lequel une direction d'extension de la structure de guidage de lumière (31) est inclinée par rapport à un bord de film du film d'amélioration d'affichage (10).

14. Dispositif d'affichage, comprenant le film d'amélioration d'affichage (10) selon l'une quelconque des revendications 1 à 13.
